# EUROPÄISCHE PATENTSCHRIFT

(11) **EP 2 242 885 B1**
(45) Veröffentlichungstag und Bekanntmachung des Hinweises auf die Patenterteilung: **22.06.2016**
(21) Anmeldenummer: 09712093.5
(22) Anmeldetag: 16.02.2009
(51) Int. Cl.: E02D 27/42

(54) **WINDENERGIEANLAGE SOWIE VERFAHREN ZU DEREN ERRICHTUNG**
WIND TURBINE AND ASSOCIATED ERECTION METHOD
ÉOLIENNE ET PROCÉDÉ D'ÉRECTION ASSOCIÉ

(30) Priorität: 22.02.2008 DE 102008010660
(43) Veröffentlichungstag der Anmeldung: 27.10.2010
(73) Patentinhaber: Senvion GmbH, 22297 Hamburg (DE)
(72) Erfinder: FROST, Bernd, 25551 Winseldorf (DE)
(74) Vertreter: Grebner, Christian Georg Rudolf
(86) Internationale Anmeldenummer: PCT/EP2009/001078
(87) Internationale Veröffentlichungsnummer: WO 2009/103475

(56) Entgegenhaltungen:
- EP-A2- 1 849 920
- WO-A1-2005/095717
- DE-A1- 19 901 510
- DE-A1-102004 031 655
- DE-U1- 8 608 396
- FR-A1- 2 429 047
- US-A1- 2007 269 273

## Beschreibung

Die Erfindung betrifft eine Windenergieanlage mit einem Rohrturm, wobei der Rohrturm oberhalb eines, vorzugsweise im Boden angeordneten, Fundamentkörpers angeordnet ist, wobei der Fundamentkörper aus einer Fundamentmasse, insbesondere Beton, ausgebildet ist, und der Rohrturm an seiner Unterseite einen Turmfußflansch aufweist, der mittels einer Flanschverbindung mit dem Fundamentkörper verbunden ist. Überdies betrifft die Erfindung ein Verfahren zum Errichten eines Turms einer Windenergieanlage sowie eine Verwendung eines Injektionsschlauches bei der Errichtung eines Turms einer Windenergieanlage.

Windenergieanlagen der Patentanmelderin sind unter der Bezeichnung 5M, MM92, MM82, MM70 sowie MD77 bekannt.

Um einen Turm einer Windenergieanlage aufzustellen, ist es bekannt, den Turm der Windenergieanlage auf seinem Fundament aus Beton auf einem Untergrund anzuordnen, wobei das Fundament mit Verbindungselementen ausgebildet ist, um den Fußflansch des Turms darauf aufzusetzen und zu befestigen. Insbesondere wird das Fundament des Turms von der Größe der Anlage und von den vorherrschenden Bodenverhältnissen bestimmt. Die Befestigung der Türme von Windenergieanlagen erfolgt in der Regel über einen in Beton vergossenen Ankerring, an dem Verbindungselemente, insbesondere Spannanker, angeordnet sind. Hierbei wird der Turmflansch auf die aus dem Betonfundament herausragenden Verbindungselemente angeordnet.

Darüber hinaus ist aus DE-A-10 2004 017 008 ein Verfahren zum Errichten eines Turms einer Windenergieanlage bekannt, wobei auf einem Fundament eine ringförmige Schalung erstellt und mit einer dünnflüssigen Vergussmasse befüllt wird. Nach Abbinden der Vergussmasse und Entfernen der Schalung wird ein Nivellierring auf der Oberfläche der abgebundenen Vergussmasse platziert und ein Turmsegment auf dem Ring aufgestellt und damit verbunden. Die verwendeten Nivellierringe müssen präzise und individuell gefertigt sein und sind auf Grund ihrer Größe sehr aufwändig herzustellen, wodurch sich besonders lange Lieferzeiten von mehreren Monaten ergeben.

Weiterhin ist in DE-A-199 01 510 ein Fundament für oberirdische Türme für Windräder zur Erzeugung von elektrischem Strom offenbart. Hierbei ist ein Turm einer Windkraftanlage auf einer aus bewährtem Beton hergestellten Fundamentplatte angeordnet. Die Fundamentplatte ist zur Reduzierung der Masse kreisringförmig ausgebildet und weist innen ein ringförmiges Anschlusselement auf.

Außerdem offenbart DE-A-10 2004 031 655 ein Betonfundament für einen Turm einer Windkraftanlage sowie ein Verfahren zu dessen Herstellung. Allerdings findet sich in diesem Dokument kein Hinweis auf die Anordnung von Injektionsschläuchen oder Verpressschläuchen bei der Errichtung eines Turms einer Windkraftanlage.

Ferner sind in FR-A-2 429 047 allgemein Schläuche offenbart, durch die eine Flüssigkeit unter Druck gefördert wird. Allerdings ist dieses Dokument als gattungsfremd anzusehen, da die technische Lehre dieses Dokuments sich nicht mit der Errichtung sowie Ausbildung von Türmen einer Windenergieanlage befasst.

Des Weiteren offenbart WO-A-2005/095717 ein Verfahren zum Errichten eines Turms, wobei auf einem Fundament eine ringförmige Schalung erstellt und mit einer dünnflüssigen Vergussmasse befüllt wird. Auf der geerdeten Vergussmasse wird anschließend ein Nivellierring platziert, auf den ein Turmsegment gestellt wird.

Schließlich offenbart DE-U-86 08 396 einen Injektionsschlauch für Betonfugen, wobei der Injektionsschlauch einen Kanal mit einem kreisförmigen Querschnitt aufweist und in die Wandungen des Stützkörpers eine Nut eingebracht ist.

In US-A-2007/0269273 ist außerdem die Verankerung eines Fundaments offenbart, wobei das Fundament auf Verankerungspfählen ausgebildet ist. Hierbei ist zwischen dem Fundament und den im Boden ausgebildeten Verankerungspfählen ein Hohlraum zunächst vorgesehen, der nach Aushärten des Fundaments mit Vergussmörtel befüllt wird.

Zudem ist in EP-A-1 849 920 ein Turmadapter für eine Windenergieanlage oder dergleichen offenbart. Hierbei ist der Adapter auf einem Betonkörper angeordnet, wobei die Unterseite des Adapters auf einer Vergussmasse angeordnet ist, die in einer ringförmigen Ausnehmung eingefüllt ist.

Ausgehend von diesem Stand der Technik ist es Aufgabe der vorliegenden Erfindung, die Errichtung eines Turms einer Windenergieanlage zu verbessern, wobei der Aufwand am Aufstellungsort des Turms möglichst gering gehalten werden soll.

Die Aufgabe wird gelöst durch eine Windenergieanlage mit einem Rohrturm, wobei der Rohrturm oberhalb eines, vorzugsweise im Boden angeordneten, Fundamentkörpers angeordnet ist, wobei der Fundamentkörper aus einer Fundamentmasse, insbesondere Beton, ausgebildet ist, und der Rohrturm an seiner Unterseite einen Turmfußflansch aufweist, der mittels einer Flanschverbindung mit dem Fundamentkörper verbunden ist, wobei die Windenergieanlage dadurch weitergebildet wird, dass a) wenigstens ein Injektionsschlauch im Bereich der dem Turmfußflansch zugewandten Oberseite des Fundamentkörpers an der Oberseite des Fundamentkörpers angeordnet ist oder b) wenigstens ein Injektionsschlauch auf der Oberseite zwischen dem Turmfußflansch und der dem Turmfußflansch zugewandten Oberseite des Fundamentkörpers angeordnet ist oder c) im Fundamentkörper ein Verbindungsbauteil angeordnet ist oder wird, auf dessen aus dem Fundamentkörper herausragenden Oberseite der Turmfußflansch angeordnet ist, wobei wenigstens ein Injektionsschlauch im Bereich des im Fundamentkörper angeordneten Unterteils des Verbindungsbauteils in einem vorbestimmten Abstand zum Unterteil vorgesehen ist, wobei der oder die Injektionsschläuche vor dem Vergießen der Fundamentmasse oder beim Betonieren so angeordnet sind, dass sie in Betonfugen verlegt sind und/oder in den sensiblen Bereichen einbetoniert oder eingebracht sind, um wasserundurchlässige, gasdichte bzw. kraftschlüssige Fugen auszubilden.

In einer alternativen Lösung wird eine Windenergieanlage vorgeschlagen, wobei die Windenergieanlage mit einem ein Unterteil und ein Oberteil aufweisenden Turm bzw. Rohrturm ausgebildet ist, wobei das Oberteil des Rohrturms oberhalb eines, vorzugsweise im Boden angeordneten, Fundamentkörpers angeordnet ist, wobei der Fundamentkörper aus einer Fundamentmasse, insbesondere Beton, ausgebildet ist, die dadurch weitergebildet wird, dass wenigstens ein Injektionsschlauch im Bereich des im Fundamentkörper angeordneten Unterteils des Turms bzw. Rohrturms in einem vorbestimmten Abstand zum Unterteil vorgesehen ist, wobei der oder die Injektionsschläuche vor dem Vergießen der Fundamentmasse oder beim Betonieren so angeordnet sind, dass sie in Betonfugen verlegt sind und/oder in den sensiblen Bereichen einbetoniert oder eingebracht sind, um wasserundurchlässige, gasdichte bzw. kraftschlüssige Fugen auszubilden.

Diese Ausführungsform weist den Vorteil auf, dass auf den kostspieligen Turmfußflansch verzichtet wird, und das Unterteil des Turms direkt im Fundamentkörper mit Beton vergossen wird. Das Oberteil des Turms weist hierbei in der Regel mehrere Sektionen auf und kann als (Stahl-)Rohrturm, Betonturm oder auch Gitterturm ausgeführt sein.

Die Erfindung beruht auf dem Gedanken, dass ein oder mehrere Injektionsschläuche bzw. Verpressschläuche im Bereich des Turmfundaments einer Windenergieanlage vorgesehen sind, wobei die Injektionsschläuche bei der Errichtung eines Turms in Betonfugen verlegt werden und/oder in den sensiblen Bereichen einbetoniert oder eingebracht werden, um Hohlräume, die durch Schwind- und Kriechprozesse im Beton entstehen könnten, auf einfache Weise abzudichten. Hierdurch wird eine wasserundurchlässige, gasdichte bzw. kraftschlüssige Fuge im Fundamentkörper sowie auf der Oberseite des Fundamentkörpers, insbesondere unterhalb eines Turmfußflansches, ausgebildet.

Insbesondere wird ein Injektionsschlauch in Bereichen eingesetzt, bei denen ein Materialwechsel von Beton auf Stahl oder ein Übergang von Beton zu Beton, wobei die Betone unterschiedliche Güte aufweisen, erfolgt. Beispielsweise werden Injektionsschläuche bzw. Verpressschläuche in der Anschlussfuge zwischen Stahlturm und Fundament eingebaut.

Weist der zu errichtende Turm der Windenergieanlage an der Unterseite einen Turmfußflansch auf, der auf ein in einem Fundament angeordneten Bauteil bzw. ein Verbindungsteil mit einem L-förmigen Flansch an seiner Oberseite aufgesetzt wird, so befindet sich das Fundamenteinbauteil bzw. der Verbindungskörper mit seinem unteren Teil im Fundamentkörper, wobei das Verbindungsteil oder das Fundamenteinbauteil mit einem (umgekehrten) T-Flansch ausgebildet ist, durch den Zug- und Drucklasten aus dem Turm aufgenommen werden.

In einer weiteren Ausgestaltung kann das Verbindungsbauteil auch als ein Ankerkorb ausgebildet sein. Entscheidend ist dabei, dass an den Übergängen zwischen dem Verbindungsteil und dem Fundamentkörper sowie zwischen dem Fundamentkörper und dem Turmfußflansch an den kraftübertragenden Stellen mit Fugen ein Injektionsschlauch bzw. ein Verpressschlauch beim Einbau berücksichtigt bzw. angeordnet wird, so dass in die Injektionsschläuche ein entsprechendes, vorzugsweise aushärtendes Medium nach der Herstellung bzw. Errichtung der Windenergieanlage eingebracht wird.

Darüber hinaus ist es in einer Ausführungsform der Windenergieanlage vorteilhaft, wenn der wenigstens eine Injektionsschlauch am Unterteil des Verbindungsbauteils oder am Unterteil des Turms bzw. Rohrturms angeordnet oder befestigt ist, so dass an diesen Stellen entstehende Hohlräume kraftschlüssig mit einer Injektionsmasse verpresst bzw. ausgefüllt werden. Hierdurch wird gewährleistet, dass das Einbringen von Wasser während des Betriebs der Windenergieanlage dauerhaft verhindert wird, so dass Hohlräume im Bereich des Fundaments einer Windenergieanlage vermieden werden und somit die Lebensdauer der Windenergieanlage erhöht wird.

Der Einbau von Injektionsschläuchen bzw. Verpressschläuchen z.B. vor einem Betoniergang ermöglicht ein einfaches Verpressen von Hohlräumen nach Herstellung des Fundaments oder nach Feststellen von, insbesondere minimalen, Relativbewegungen zwischen einem Fundamenteinbauteil und dem Betonsockel. Durch den Einsatz der Injektionsschläuche wird mit relativ geringem Aufwand eine kraftschlüssige Verbindung zwischen einem Verbindungsteil bzw. einem Fundamenteinbauteil oder einem Ankerkorb und dem Beton des Fundamentkörpers erreicht. Schließlich kann durch das Einbringen von einer Injektionsmasse in die Hohlräume durch den Injektionsschlauch bereits eingedrungenes Wasser oder Flüssigkeiten (wieder) aus den Hohlräumen verdrängt werden.

Des Weiteren ist es in einer bevorzugten Ausführungsform vorgesehen, dass ein oder mehrere Injektionsschläuche an einem unteren Flanschring des Unterteils des Verbindungsbauteils im Fundamentkörper vorgesehen sind, so dass durch Einbringen einer Injektionsmasse in den direkt auf oder unter dem Flansch positionierten Injektionsschläuchen, vorzugsweise in Kontakt zu Flansch, gezielt Fugen im kraftübertragenden Bereich zwischen dem Flansch des Verbindungsbauteils und dem Fundamentkörper ausgefüllt werden.

Wird bei der Errichtung einer Windenergieanlage zunächst ein Bett für den Fundamentkörper ausgehoben und anschließend eine im Wesentlichen eben und horizontal verlaufende Sauberkeitsplatte als untere Schicht des Fundamentkörpers hergestellt, so ist es in einer bevorzugten Ausführungsform vorgesehen, dass der oder die Injektionsschläuche auf einem unteren Abschnitt oder einer unteren Schicht des Fundamentkörpers, insbesondere einer Sauberkeitsplatte, angeordnet oder befestigt sind. Anschließend wird der Fundamentkörper auf bekannte Weise mit Beton vergossen.

Ebenso kann das Fundament auch in mehreren Abschnitten vergossen werden, sodass zunächst der untere Abschnitt des Fundamentes vergossen wird, anschließend das Verbindungsbauteil aufgesetzt wird und die Injektionsschläuche angeordnet werden und danach der obere Abschnitt vergossen wird. In diesem Falle werden die Injektionsschläuche bevorzugt auf dem unteren Fundamentabschnitt angeordnet.

Weiterhin ist in einer bevorzugten Ausgestaltung vorgesehen, dass wenigstens ein Ende, vorzugsweise beide Enden, des Injektionsschlauches oder der Injektionsschläuche aus dem Fundamentkörper, vorzugsweise im Turminneren, herausragend ausgebildet sind, wobei insbesondere eine Verwahrtasche zur Aufnahme des oder der Enden des Injektionsschlauches bzw. der -schläuche vorgesehen ist. Durch diese Maßnahme wird erreicht, dass die Enden der Injektionsschläuche bzw. der Verpressschläuche auch nach Ausbildung bzw. Errichtung einer Windenergieanlage mit einem Injektionsmedium befüllt werden können, wobei insbesondere nach einer vorbestimmten Betriebsdauer der Windenergieanlage ein dichtendes Injektionsmedium über die dann frei zugänglichen Enden des oder der Injektionsschläuche eingepresst werden. Somit wird im Bedarfsfall, beispielsweise bei Rissbildungen ein dichtendes Injektionsmedium, wie z.B. Kunstharz oder Zementschlamm oder dergleichen zum Abdichten von Hohlräumen oder gebildeten Rissen eingepresst.

Bevorzugterweise ist das Verbindungsbauteil, das mit seinem Unterteil im Fundamentkörper angeordnet wird oder ist, als ein Fundamenteinbauteil oder als ein Ankerkorb ausgebildet.

Überdies ist in einer bevorzugten Ausführungsform weiter vorgesehen, dass ein Verbindungszwischenkörper zwischen der Unterseite des Turmfußflansches und der Oberseite des Fundamentkörpers vorgesehen ist, wobei der wenigstens eine Injektionsschlauch unterhalb oder im Verbindungszwischenkörper angeordnet ist, wobei insbesondere der Verbindungszwischenkörper im kraftschlüssigen Kontakt mit dem Turmfußflansch ist. Hierbei ist der Verbindungszwischenkörper auf der Oberseite des Fundamentkörpers und unterhalb des Turmfußflansches angeordnet, wobei der Verbindungszwischenkörper einen Hohlraum aufweisen kann.

Insbesondere ist der Verbindungszwischenkörper aus einem Beton höherer Güte als das Material bzw. der Beton des Fundamentkörpers ausgebildet. Der Verbindungszwischenkörper weist hierbei eine Kontaktfläche zum Turm bzw. Turmfußflansch und zu einer unteren Kontaktfläche zum Fundamentkörper auf. Des Weiteren ist in einer Ausführungsform vorgesehen, dass der Verbindungszwischenkörper als Lastverteilplatte oder als, vorzugsweise mit einem Aufnahmeraum für den Injektionsschlauch ausgebildeter, Kraftübertragungskörper ausgebildet ist.

Des Weiteren wird die Aufgabe gelöst durch ein Verfahren zum Errichten eines Turms einer Windenergieanlage, wobei die folgenden Verfahrensschritte ausgeführt werden:
- Ausbildung eines Fundamentkörpers aus einer Fundamentmasse, vorzugsweise auf oder in einem Boden,
- Anordnung eines Turms oder eines Turmteils auf der Oberseite des Fundamentkörpers, wobei in einem zwischen der Unterseite eines Turmfußflansches des Turms oder des Turmteils und der Oberseite des Fundamentkörpers auszubildenden oder ausgebildeten Verbindungszwischenkörper wenigstens ein Injektionsschlauch angeordnet ist,
- wobei vor oder während oder nach Anordnung des Turms oder des Turmteils auf dem Fundamentkörper eine Injektionsmasse in den oder die Injektionsschläuche eingebracht wird,
wobei der oder die Injektionsschläuche vor dem Vergießen der Fundamentmasse oder beim Betonieren so angeordnet sind, dass sie in Betonfugen verlegt sind und/oder in den sensiblen Bereichen einbetoniert oder eingebracht sind, um wasserundurchlässige, gasdichte bzw. kraftschlüssige Fugen auszubilden.

In einer Alternative werden zum Errichten eines Turms weiterhin zur Lösung der gestellten Aufgabe die folgenden Verfahrensschritte ausgeführt:
- Ausbildung eines Fundamentkörpers aus einer Fundamentmasse, vorzugsweise auf oder in einem Boden, wobei im Fundamentkörper ein Verbindungsbauteil angeordnet ist und dessen Oberteil aus dem Fundamentkörper herausragt,
- Anordnung wenigstens eines Injektionsschlauches im Bereich des im Fundamentkörper angeordneten Unterteils des Verbindungsbauteils,
- Anordnung eines Turms oder eines Turmteils auf der Oberseite des Verbindungsbauteils,
- wobei vor oder während oder nach Anordnung des Turms oder des Turmteils auf dem Verbindungsbauteil eine Injektionsmasse in den oder die Injektionsschläuche eingebracht wird,
wobei der oder die Injektionsschläuche vor dem Vergießen der Fundamentmasse oder beim Betonieren so angeordnet sind, dass sie in Betonfugen verlegt sind und/oder in den sensiblen Bereichen einbetoniert oder eingebracht sind, um wasserundurchlässige, gasdichte bzw. kraftschlüssige Fugen auszubilden.

Gemäß einer dritten Lösung der Aufgabe sind bei dem Verfahren zum Errichten eines Turms einer Windenergieanlage die folgenden Verfahrensschritte auszuführen:
- Anordnung eines Oberteils eines Rohrturms oberhalb eines, insbesondere auf oder in einem Boden auszubildenden, Fundamentkörpers, wobei wenigstens ein Injektionsschlauch im Bereich des im Fundamentkörper angeordneten Unterteils des Rohrturms in einem vorbestimmten Abstand zum Unterteil angeordnet ist,
- Ausbildung eines Fundamentkörpers aus einer Fundamentmasse, wobei vor oder während oder nach Anordnung des Oberteils des Turms oberhalb des Fundamentkörpers eine Injektionsmasse in den oder die Injektionsschläuche eingebracht wird,
wobei der oder die Injektionsschläuche vor dem Vergießen der Fundamentmasse oder beim Betonieren so angeordnet sind, dass sie in . Betonfugen verlegt sind und/oder in den sensiblen Bereichen einbetoniert oder eingebracht sind, um wasserundurchlässige, gasdichte bzw. kraftschlüssige Fugen auszubilden.

Bevorzugterweise wird nach Vergießen einer Fundamentmasse, insbesondere Beton, zur Ausbildung eines Fundamentkörpers ein Injektionsverfüllmittel, z.B. ein Harz oder eine Zementmasse oder dergleichen, in den Injektionsschlauch eingebracht, um entsprechende Fugen zwischen den Fundamentbauteilen abzudichten.

Weiterhin ist in einer Ausgestaltung der Verfahren vorgesehen, dass vor dem Vergießen der Fundamentmasse, insbesondere Beton, der oder die Injektionsschläuche mit einer Flüssigkeit, vorzugsweise Wasser oder einem Medium, befüllt werden oder sind.

Außerdem werden oder sind bevorzugterweise der oder die Injektionsschläuche mit einer Vergussmasse nach Anordnung des oder der Injektionsschläuche auf der Oberseite des Fundamentkörpers vergossen, wobei insbesondere der oder die Injektionsschläuche unterhalb einer Lastverteilungsplatte oder im Hohlraum eines Verbindungszwischenkörpers zwischen der Oberseite des Fundamentkörpers und der Unterseite des Turmfußflansches angeordnet werden oder sind.

Weiterhin zeichnet sich das Verfahren dadurch aus, dass das Vergießen der Vergussmasse nach Vergießen des Betons und nach Ausrichtung des Verbindungsbauteils und/oder nach Ausrichtung des Verbindungszwischenkörpers erfolgt.

Darüber hinaus wird die Aufgabe gelöst durch eine Verwendung eines Injektionsschlauches bei der Errichtung eines Turms einer Windenergieanlage wie sie voranstehend beschrieben ist, wobei insbesondere die ebenfalls beschriebenen Verfahrensschritte ausgeführt werden. Zur Vermeidung von Wiederholungen wird auf die obigen Ausführungen ausdrücklich verwiesen.

Bevorzugterweise werden die Injektionsschläuche an einem Kraftübertragsungselement oder Kraftübertragungsbauteil des Fundaments oder am Boden oder auf einer dünnen Betonplatte, auf der der Fundamentkörper anschließend ausgebildet wird, befestigt. Dabei werden die Injektionsschläuche derart vorzugsweise verlegt, dass sie beispielsweise der kreisrunden Form eines Flansches oder einer Lastverteilungsplatte folgen, wobei die Injektionsschläuche in einer bevorzugten Ausführungsform in einem vorbestimmten Abstand vom Kraftübertragungsbauteil angeordnet werden. Hierbei kann der Abstand einige Schlauchdurchmesser betragen, bevorzugt weniger als ein, insbesondere weniger als ein halber Schlauchdurchmesser sein. In einer Ausführungsform ist der Injektionsschlauch in direktem Kontakt mit dem entsprechenden Kraftübertragungsbauteil. Günstig ist es dabei, wenn der Injektionsschlauch oder die Injektionsschläuche in Kraftfluss der entsprechenden Kraftübertragungsbauteile angeordnet sind.

Durch Befüllung des Injektionsschlauches mit einer Flüssigkeit, z.B. Wasser, vor dem Vergießen des Betons werden ein Aufschwimmen des Injektionsschlauchs oder auch Querschnittsverengungen vermieden.

Sind mehrere Injektionsschläuche parallel zueinander angeordnet, so ermöglicht die Montage der Injektionsschläuche, dass nach Nutzung eines Injektionsschlauches weitere Injektionsschläuche als Reserve zu einem späteren Zeitpunkt verpresst werden, wobei zum Schutz der Reserveschläuche beim ersten Verpressvorgang diese vorrübergehend mit einer austauschbaren Flüssigkeit, z.B. Wasser befüllt werden oder sind. Die Verpressung der Injektionsschläuche erfolgt insbesondere mit Harzen, Fließmörtel oder anderen geeigneten Injektionsmitteln, die in der Lage sind, Kräfte zu übertragen oder Hohlräume wasserdicht auszufüllen. Typischerweise ist der Durchmesser von Injektionsschläuchen zwischen 2 mm bis 100 mm, insbesondere 5 mm bis 50 mm und bevorzugterweise zwischen 8 mm bis 35 mm.

Die verwendeten Injektionsschläuche bzw. Verpressschläuche können dabei von der folgenden Art sein:
- Perforierte runde PVC-Innenschläuche mit Doppelgewebeummantelung, so dass das Eindringen von Zementleim in das Schlauchinnere beim Betonieren durch das feine Gewebe der Doppelgewebeummantelung verhindert (Filterfunktion) wird.
- Perforierte oder geschlitzte runde PVC-Innenschläuche mit geschlitzter Moosgummiummantelung, wobei die Schlitze der Ummantelung versetzt zur Perforierung des PVC-Innenschlauchs angeordnet sind. Über eine Art Ventilsystem wird das Eindringen von Zementleim beim Betonieren verhindert.
- Perforierte PVC-Innenschläuche mit Neoprenstreifen. Hierbei sind die Austrittsöffnungen des PVC-Innenschlauchs mit Neoprenstreifen abgedeckt, wobei diese Streifen durch ein engmaschiges Außennetz in ihrer Lage fixiert werden.
- Perforierte runde PVC-Innenschläuche mit geschlitzter Folienummantelung. Die Schlitze der Folienummantelung sind dabei versetzt zu den Austrittsöffnungen des Innenschlauchs angeordnet. Das Eindringen von Zementleim in das Schlauchinnere wird über Ventilsysteme verhindert.
- Halbrunde oder rechteckige Systeme, wobei halbrunde oder rechteckige Kunststoff- oder Gummiprofile mit Injektionskanälen mit Austrittsöffnungen versehen sind, die mit Schaumstoff abgedeckt sind.
- Geschlitzte Flachschläuche aus PVC ohne zusätzliche Ummantelung. Die Schlauchschlitze bleiben unter dem Betonierdruck geschlossen und öffnen sich erst bei einem vorbestimmten Injektionsdruck, um das Eindringen von Zementleim beim Betonieren zu verhindern (Ventilfunktion).
- Flachschläuche, die häufig mit mehreren Injektionskanälen versehen sind. Jeder Injektionskanal kann dabei getrennt für einen Injektionsvorgang verwendet werden (Mehrfachinjektion)

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a, 1b: verschiedene Ansichten eines Fundaments einer Windenergieanlage;
- Fig. 2: eine Querschnittsansicht durch einen Ausschnitt aus einem Fundament einer Windenergieanlage;
- Fig. 3a, 3b, 3c: verschiedene Ansichten eines Flansches eines Fundamenteinbauteils im Querschnitt;
- Fig. 4a, 4b: jeweils eine Querschnittsansicht durch einen in einem Fundament angeordneten Ankerkorb in einer Übersichtsdarstellung (Fig. 4a) und in einer Detailansicht (Fig. 4b) und
- Fig. 5: eine weitere erfindungsgemäße Anordnung von Injektionsschläuchen an einem Fundament einer Windenergieanlage.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

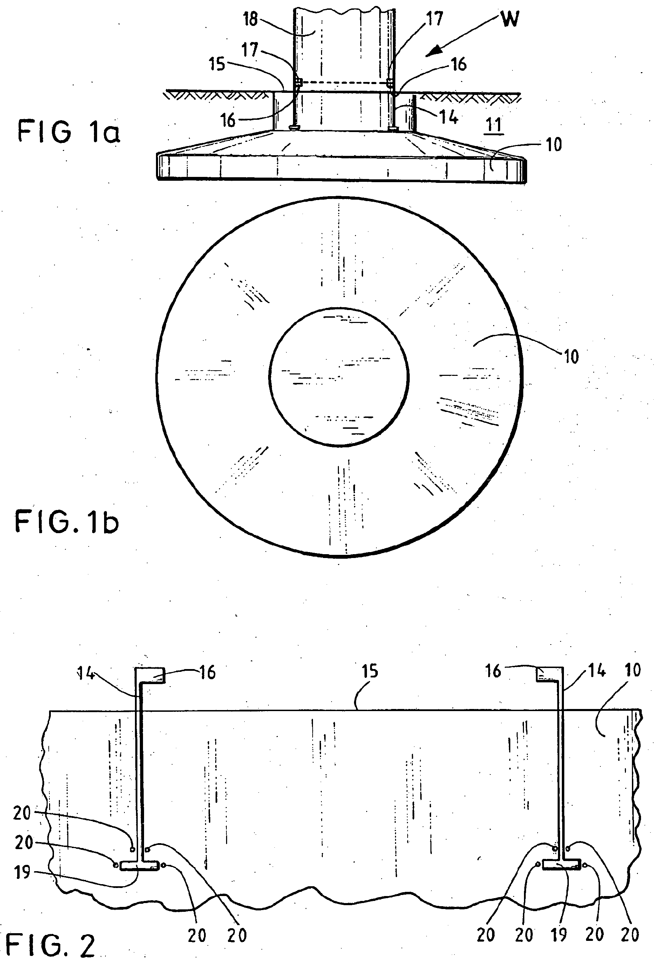

Fig. 1 a zeigt im Querschnitt den unteren Teil einer schematisch eingezeichneten Windenergieanlage W, wobei die Windenergieanlage W auf einem im Erdboden 11 errichteten bzw. ausgebildeten Fundamentkörper 10 errichtet ist. Der Fundamentkörper 10 ist aus Beton hergestellt und verfügt im unteren Bereich über einen verbreiterten Fuß, der vom Erdboden 11 eingefasst ist.

Im mittleren Teil des Fundamentkörpers 10 ist in der Mitte ein kreisförmiger Sockel ausgebildet, in dem ein Fundamenteinbauteil 14 einbetoniert bzw. fest angeordnet ist. Das Fundamenteinbauteil 14 ist ringförmig im Fundamentkörper 10 angeordnet und ragt aus dem Fundamentkörper 10 hervor. Oberhalb der Oberseite 15 des Fundamentkörpers 10 verfügt das Fundamenteinbauteil 14 über einen turmseitigen Flansch 16, auf dem ein Turmfußflansch 17 des darauf angeordneten Turms 18 der Windenergieanlage W angeordnet ist.

Der Turmfußflansch 17 und der Flansch 16 des Fundamenteinbauteils 14 sind über bekannte Schraubverbindungen miteinander verbunden.

Fig. 1 b zeigt eine Draufsicht auf den Fundamentkörper 10, wobei aus Fig. 1b hervorgeht, dass der Fundamentkörper 10 kreisrund oder kreisförmig ausgebildet ist. Ebenso kann der Fundamentkörper 10 in anderen Ausgestaltungen polygonförmig, kreuzförmig oder sternförmig ausgebildet sein.

Fig. 2 zeigt eine Detailansicht des Fundamenteinbauteils 14, das im Fundamentkörper 10 eingegossen ist. An der Unterseite des Fundamenteinbauteils 14, das im Fundamentkörper 10 eingegossen ist, verfügt das Fundamenteinbauteil 14 über einen Eingießflansch 19. Der Eingießflansch 19 ist hierbei T-förmig im Querschnitt ausgebildet, wobei die T-Form auf den Kopf gestellt bzw. umgedreht ist.

Im unteren Bereich des Eingießflansches 19 sind auf beiden Seiten, sowohl auf der Innenseite als auch auf der Außenseite des Fundamenteinbauteils 14 Verpressschläuche 20 angeordnet. Die Verpressschläuche 20 verlaufen entlang dem Unterteil des Fundamenteinbauteils 14.

Die Verpressschläuche 20 können werkseits oder bauseits montiert werden oder sein, wobei die Verpressschläuche 20 mittels Halteösen oder anderer Befestigungsmittel wie z.B. Klammern oder Klebeband, am Fundamenteinbauteil 14 angebracht werden. Insbesondere sind die Verpressschläuche 20 kreisförmig entlang des Eingießflansches 19 angeordnet. Hierbei sind sie so angeordnet, dass einerseits der kraftübertragende Eingießflansch 19 zuverlässig verpresst wird und andererseits die Verpressschläuche 20 selbst die kraftübertragende Fläche nicht schwächen.

Entlang des Eingießflansches 19 sind mehrere Verpressschläuche 20 angeordnet, die nach Aushärten des Betons des Fundamentkörpers 10 verpresst werden oder in einem zeitlichen Abstand, beispielsweise bei Auftreten von Rissen, mit einem Injektionsmörtel, z.B. Harzen oder Fließmörtel, verpresst werden.

Für die Verpressung eignen sich insbesondere Injektionsmittel, die geeignet sind, Kräfte zu übertragen und/oder Hohlräume wasserdicht auszufüllen.

In einer Ausgestaltung sind die Schlauchenden der Verpressschläuche 20 zum Befüllen und Entlüften der Schläuche im Wesentlichen vertikal aus dem Fundamentkörper 10 herausgeführt, um nach Aushärten des Betons die Verpressschläuche mit einem Injektionsmittel zu beaufschlagen.

Darüber hinaus ermöglicht die Montage mehrerer Injektionsschläuche ein Verpressen der Verpressschläuche nach einer bestimmten Reihenfolge, wobei eine Verpressung insbesondere dann ausgeführt wird, wenn beispielsweise Risse oder Hohlräume im Fundamentkörper, insbesondere im Bereich des Fundamenteinbauteils 14 festgestellt werden bzw. auftreten.

Typischerweise werden bei der Verpressung von Harzen oder Zementleim sowie Zementmörtel Drücke von bis zu 80 bar verwendet. Der Durchmesser der Verpressschläuche beträgt zwischen 2 mm bis 100 mm, insbesondere zwischen 5 mm bis 50 mm, weiter vorzugsweise zwischen 8 mm bis 35 mm.

Zum Verpressen wird eine Verpresseinrichtung, z.B. in Form einer Förderpumpe, an ein Ende oder die freien Enden der Verpressschläuche montiert. Eine vorteilhafte Ausführung kann auch vorsehen, mehrere Verpressschläuche durch Verteilerstücke miteinander zu verbinden.

Insbesondere werden die Verpressschläuche 20 an einem Kraftübertragungselement oder am Boden oder an einer dünnen Betonplatte (Sauberkeitsschicht) angeordnet bzw. befestigt. Neben einer Anordnung der Verpressschläuche 20 im Kraftfluss des Kraftübertragungselements bzw. -bauteils ist es auch im Rahmen der Erfindung möglich, die Verpressschläuche außerhalb des Kraftflusses anzuordnen.

Insbesondere werden die Verpressschläuche 20 mit einer austauschbaren Flüssigkeit, z.B. Wasser oder dergleichen vor dem Vergießen des Betons des Fundamentkörpers 10 befüllt, um ein Aufschwimmen des Schlauches bzw. der Verpressschläuche oder Querschnittsverengungen zu vermeiden.

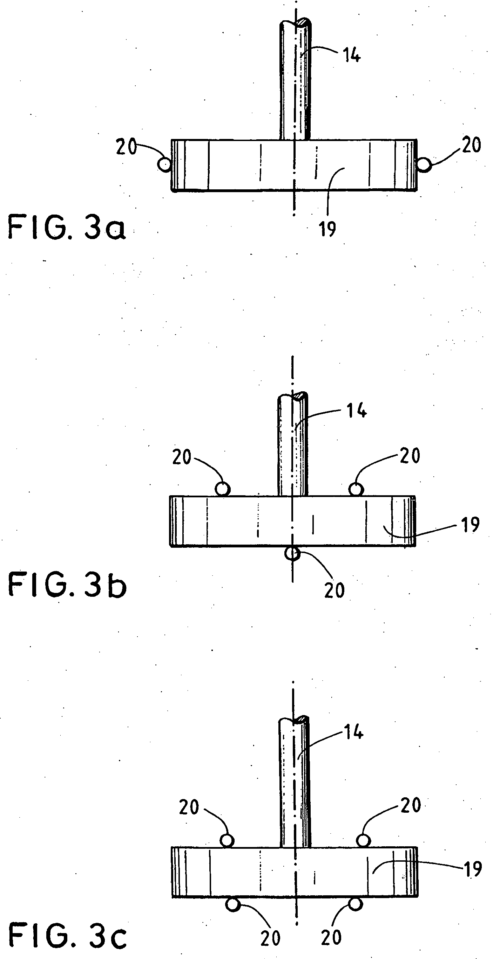

In den Figuren 3a bis 3c sind jeweils unterschiedliche Möglichkeiten der Anordnung von Verpressschläuchen 20 im Bereich des T-förmigen Querbalkens des unteren Eingießflansches 19 des Fundamenteinbauteils 14 dargestellt. Fig. 3a zeigt einen Querschnitt, bei dem die Verpressschläuche 20 beidseits symmetrisch des Querbalkens des umgedrehten "T" angeordnet sind. In Fig. 3b ist eine Ausführungsform der Anordnung von Verpressschläuchen 20 dargestellt, wobei unterhalb des Querbalkens ein Verpressschlauch 20 mittig angeordnet ist, während auf der Oberseite des Eingießflansches 19 symmetrisch zwei Verpressschläuche 20 jeweils befestigt sind.

Bei dem in Fig. 3c dargestellten Ausführungsbeispiel sind sowohl an der Oberseite als auch an der Unterseite des Querbalkens des "T" des Eingießflansches 19 jeweils zwei Verpressschläuche 20 symmetrisch so angeordnet, dass die waagerechten Flanschoberflächen gleichmäßig abgedeckt sind.

Im Rahmen der Erfindung ist es möglich, auf eine vorbestimmte Art und je nach Anforderungsprofil Verpressschläuche 20 am Eingießflansch 19 im Bereich des eingegossenen Teils des Eingießflansches im Fundamentkörper 10 auszubilden.

Bei dem in Fig. 3a gezeigten Ausführungsbeispiel sind die Verpressschläuche 20 an der Stirnseite des Flansches 19 positioniert, so dass die Verpressschläuche außerhalb des kraftübertragenden Bereiches am Flansch 19 angeordnet sind. In den Ausführungsbeispielen gemäß Fig. 3b und 3c sind die Verpressschläuche 20 direkt im Kraftfluss auf bzw. unter dem Flansch, idealerweise mit Kontakt zum Flansch angeordnet.

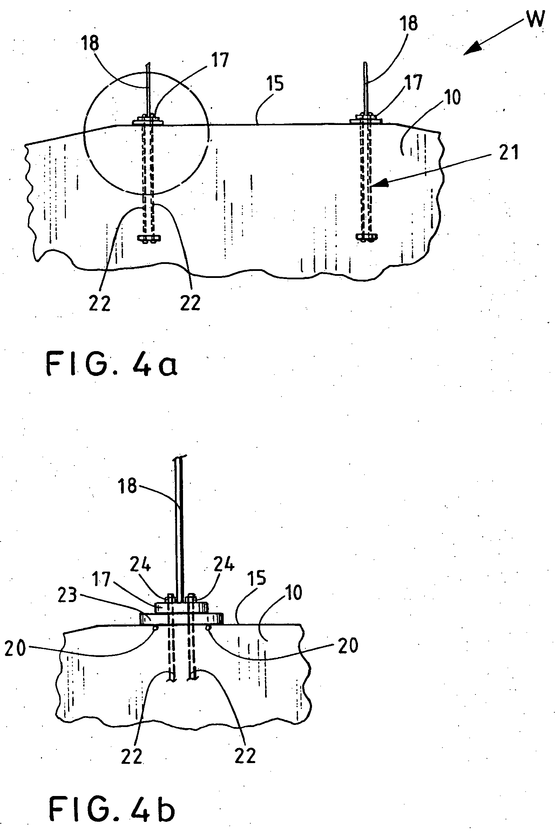

In Fig. 4a ist ein Querschnitt durch einen Fundamentkörper 10 gezeigt, in dem ein Ankerkorb 21 einbetoniert ist. Der Ankerkorb 21 verfügt über senkrecht angeordnete Ankerstangen 22, die oberhalb der Oberseite 15 des Fundamentkörpers 10 enden. Eine vergrößerte Teilansicht des in Fig. 4a eingekreisten Bereiches der Oberseite 15 ist in Fig. 4b dargestellt.

Die Ankerstangen 22 durchsetzen an der Oberseite 15 des Fundamentkörpers 10 ein umlaufendes Betonfertigteil 23 als Zwischenkörper und den Turmfußflansch 17 des als Stahlrohrtum ausgebildeten Turms 18. An der Oberseite sind die Ankerstangen 23 mit angezogenen Muttern 24 versehen.

Anstelle des Betonfertigteils 23 kann auch ein Lastverteilungsblech als lastverteilendes Bauteil vorgesehen sein. Unterhalb des Betonfertigteils 23 sind im Bereich der Oberseite 15 kreisförmig Verpressschläuche 20 angeordnet, um die Fuge zwischen der Oberseite 15 und dem Betonfertigteil 23 bei Bedarf auszufüllen.

Hierbei kann zunächst der Betonkörper 10 vergossen worden sein und nachfolgend das Betonfertigteil 23 oder die Lasteinleitungsplatte aufgesetzt werden. In einer bevorzugten Ausführung kann auch der Fundamentkörper 10 direkt an den Turmfußflansch 17 oder das Betonfertigteil 23 bzw. Lastverteilungsblech angegossen werden, nachdem diese z.B. an den Ankerstangen 22 ausgerichtet und justiert wurden. In dieser Ausführungsform sind die Verpressschläuche dann bevorzugt direkt in der Oberfläche des Fundamentkörpers 10 eingegossen, um eventuelle, beim Betonvergießen entstandene Hohlräume direkt unter der Krafteinleitung zu verfüllen.

In einer Alternative können die Verpressschläuche auch im Betonfertigteil 23 angeordnet sein.

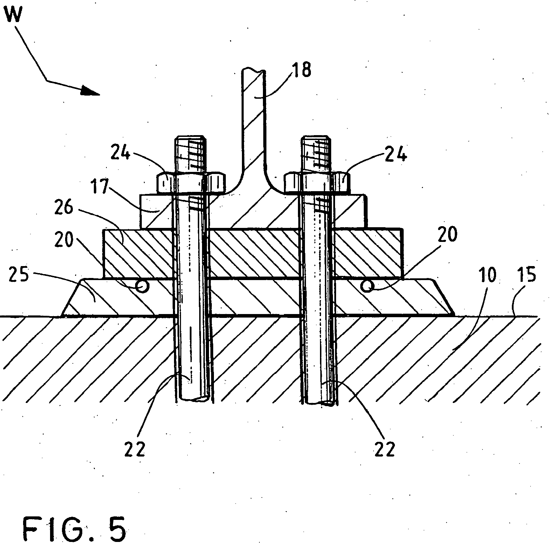

In Fig. 5 ist im Querschnitt ein weiteres Ausführungsbeispiel zur Anordnung von Verpressschläuchen 20 dargestellt. Hierbei ragen Ankerstangen 22 aus dem Fundamentkörper 10 hervor, wobei die Ankerstangen 22 oberhalb der Oberseite 15 sich durch eine ausgehärtete Vergussmasse 25 sowie eine Lastverteilplatte 26 und den Turmfußflansch 17 erstrecken. Auf der Oberseite des Turmfußflansches 17 sind die Ankerstangen 22 mit Muttern 24 versehen.

Gemäß der Erfindung sind die Verpressschläuche 22 oberhalb der Oberseite 15 in der Vergussmasse 25 angeordnet, wobei die Verpressschläuche 20 beim Vergießen der Vergussmasse 25 in der dafür entsprechend ausgebildeten Verschalung angeordnet sind. Nach Aushärten des Vergussmörtels 25 wird die zur Lastverteilung vorgesehene Lastverteilungsplatte 26 auf der Vergussmasse 25 angeordnet.

In einer alternativen Ausführung kann auch die Vergussmasse 25 in einer Vertiefung des Fundamentkörpers 10 vergossen sein, so dass die Oberseite der Vergussmasse 25 im Bereich der Oberseite 15 des Fundamentkörpers 10 liegt.

### Bezugszeichenliste

- 10: Fundamentkörper
- 11: Erdboden
- 14: Fundamenteinbauteil
- 15: Oberseite
- 16: Flansch
- 17: Turmfußflansch
- 18: Turm
- 19: Eingießflansch
- 20: Verpressschläuche
- 21: Ankerkorb
- 22: Ankerstange
- 23: Betonfertigteil
- 24: Mutter
- 25: Vergussmasse
- 26: Lastverteilplatte

- W: Windenergieanlage

## Patentansprüche

1. Windenergieanlage (W) mit einem Rohrturm (18), wobei der Rohrturm (18) oberhalb eines, vorzugsweise im Boden (11) angeordneten, Fundamentkörpers (10) angeordnet ist, wobei der Fundamentkörper (10) aus einer Fundamentmasse, insbesondere Beton, ausgebildet ist, und der Rohrturm (18) an seiner Unterseite einen Turmfußflansch (17) aufweist, der mittels einer Flanschverbindung mit dem Fundamentkörper (10) verbunden ist, **dadurch gekennzeichnet, dass**
wenigstens ein Injektionsschlauch (20) im Bereich der dem Turmfußflansch (17) zugewandten Oberseite (15) des Fundamentkörpers (10) an der Oberseite (15) des Fundamentkörpers (10) angeordnet ist
oder wenigstens ein Injektionsschlauch (20) auf der Oberseite (15) zwischen dem Turmfußflansch (17) und der dem Turmfußflansch (17) zugewandten Oberseite (15) des Fundamentkörpers (10) angeordnet ist
oder im Fundamentkörper (10) ein Verbindungsbauteil (14, 21) angeordnet ist, auf dessen aus dem Fundamentkörper (10) herausragenden Oberseite (15) der Turmfußflansch (17) angeordnet ist, wobei wenigstens ein Injektionsschlauch (20) im Bereich des im Fundamentkörper (10) angeordneten Unterteils des Verbindungsbauteils (14, 21) in einem vorbestimmten Abstand zum Unterteil vorgesehen ist,
wobei der oder die Injektionsschläuche vor dem Vergießen der Fundamentmasse oder beim Betonieren so angeordnet sind, dass sie in Betonfugen verlegt sind und/oder in den sensiblen Bereichen einbetoniert oder eingebracht sind, um wasserundurchlässige, gasdichte bzw. kraftschlüssige Fugen auszubilden.

2. Windenergieanlage (W) mit einem ein Unterteil und ein Oberteil aufweisenden Turm (18), wobei das Oberteil des Turms (18) oberhalb eines, vorzugsweise im Boden (11) angeordneten, Fundamentkörpers (10) angeordnet ist, wobei der Fundamentkörper (10) aus einer Fundamentmasse, insbesondere Beton, ausgebildet ist, **dadurch gekennzeichnet, dass** wenigstens ein Injektionsschlauch (20) im Bereich des im Fundamentkörper (10) angeordneten Unterteils des Turms (18) in einem vorbestimmten Abstand zum Unterteil vorgesehen ist, wobei der oder die Injektionsschläuche vor dem Vergießen der Fundamentmasse oder beim Betonieren so angeordnet sind, dass sie in Betonfugen verlegt sind und/oder in den sensiblen Bereichen einbetoniert oder eingebracht sind, um wasserundurchlässige, gasdichte bzw. kraftschlüssige Fugen auszubilden.

3. Windenergieanlage (W) nach Anspruch 1 oder 2, **dadurch gekennzeichnet, dass** der wenigstens eine Injektionsschlauch (20) am Unterteil des Verbindungsbauteils (14, 21) oder am Unterteil des Turms (18) angeordnet oder befestigt ist.

4. Windenergieanlage (W) nach Anspruch 1 oder 3, **dadurch gekennzeichnet, dass** ein oder mehrere Injektionsschläuche (20) an einem unteren Flanschring (19) des Unterteils des Verbindungsbauteils (14, 21) vorgesehen sind.

5. Windenergieanlage (W) nach einem der Ansprüche 1 bis 4, **dadurch gekennzeichnet, dass** der oder die Injektionsschläuche (20) auf einem unteren Abschnitt oder einer unteren Schicht des Fundamentkörpers (10), insbesondere einer Sauberkeitsplatte, angeordnet oder befestigt sind und/oder wenigstens ein Ende, vorzugsweise beide Enden, des Injektionsschlauches (20) oder der Injektionsschläuche (20) aus dem Fundamentkörper (10), vorzugsweise im Turminneren, herausragend ausgebildet sind, wobei insbesondere eine Verwahrtasche zur Aufnahme des oder der Enden des Injektionsschlauches (20) vorgesehen ist.

6. Windenergieanlage (W) nach einem der Ansprüche 1, 3 bis 5, **dadurch gekennzeichnet, dass** das Verbindungsbauteil (14, 21) als ein Fundamenteinbauteil (14) oder als ein Ankerkorb (21) ausgebildet ist.

7. Windenergieanlage (W) nach Anspruch 1, **dadurch gekennzeichnet, dass** ein Verbindungszwischenkörper (23, 25, 26) zwischen der Unterseite des Turmfußflansches (17) und der Oberseite des Fundamentkörpers (10) vorgesehen ist, wobei der wenigstens eine Injektionsschlauch (20) unterhalb oder im Verbindungszwischenkörper (25) angeordnet ist, wobei insbesondere der Verbindungszwischenkörper (23, 25, 26) im kraftschlüssigen Kontakt mit dem Turmfußflansch (17) ist, wobei insbesondere der Verbindungszwischenkörper (23, 25, 26) als Lastverteilplatte (26) oder als, vorzugsweise mit einem Aufnahmeraum für den Injektionsschlauch (20) ausgebildeter, Kraftübertragungskörper (25) ausgebildet ist.

8. Verfahren zum Errichten eines Turms (18) einer Windenergieanlage (W) mit den folgenden Verfahrensschritten:
- Ausbildung eines Fundamentkörpers (10) aus einer Fundamentmasse, vorzugsweise auf oder in einem Boden (11),
- Anordnung eines Turms (18) oder eines Turmteils auf der Oberseite (15) des Fundamentkörpers (10), wobei in einem zwischen der Unterseite eines Turmfußflansches (17) des Turms (18) öder des Turmteils und der Oberseite (15) des Fundamentkörpers (10) auszubildenden oder ausgebildeten Verbindungszwischenkörper (25) wenigstens ein Injektionsschlauch (20) angeordnet ist,
- wobei vor oder während oder nach Anordnung des Turms (18) oder des Turmteils auf dem Fundamentkörper (10) eine Injektionsmasse in den oder die Injektionsschläuche (20) eingebracht wird,
wobei der oder die Injektionsschläuche vor dem Vergießen der Fundamentmasse oder beim Betonieren so angeordnet sind, dass sie in Betonfugen verlegt sind und/oder in den sensiblen Bereichen einbetoniert oder eingebracht sind, um wasserundurchlässige, gasdichte bzw. kraftschlüssige Fugen auszubilden.

9. Verfahren zum Errichten eines Turms (18) einer Windenergieanlage (W) mit den folgenden Verfahrensschritten:
- Ausbildung eines Fundamentkörpers (10) aus einer Fundamentmasse, vorzugsweise auf oder in einem Boden (11), wobei im Fundamentkörper (10) ein Verbindungsbauteil (14, 21) angeordnet ist und dessen Oberteil aus dem Fundamentkörper (10) herausragt,
- Anordnung wenigstens eines Injektionsschlauches (20) im Bereich des im Fundamentkörper (10) angeordneten Unterteils des Verbindungsbauteils (14, 21),
- Anordnung eines Turms (18) oder eines Turmteils auf der Oberseite des Verbindungsbauteils (14, 21),
- wobei vor oder während oder nach Anordnung des Turms (18) oder des Turmteils auf dem Verbindungsbauteil (14, 21) eine Injektionsmasse in den oder die Injektionsschläuche (20) eingebracht wird,
wobei der oder die Injektionsschläuche vor dem Vergießen der Fundamentmasse oder beim Betonieren so angeordnet sind, dass sie in Betonfugen verlegt sind und/oder in den sensiblen Bereichen einbetoniert oder eingebracht sind, um wasserundurchlässige, gasdichte bzw. kraftschlüssige Fugen auszubilden.

10. Verfahren zum Errichten eines Turms (18) einer Windenergieanlage (W) mit den folgenden Verfahrensschritten:
- Anordnung eines Oberteils eines Rohrturms (18) oberhalb eines Fundamentkörpers (10), wobei wenigstens ein Injektionsschlauch (20) im Bereich des im Fundamentkörper (10) angeordneten Unterteils des Rohrturms (18) in einem vorbestimmten Abstand zum Unterteil angeordnet ist,
- Ausbildung eines Fundamentkörpers (10) aus einer Fundamentmasse, wobei vor oder während oder nach Anordnung des Oberteils des Turms (18) oberhalb des Fundamentkörpers (10) eine Injektionsmasse in den oder die Injektionsschläuche (20) eingebracht wird
wobei der oder die Injektionsschläuche vor dem Vergießen der Fundamentmasse oder beim Betonieren so angeordnet sind, dass sie in Betonfugen verlegt sind und/oder in den sensiblen Bereichen einbetoniert oder eingebracht sind, um wasserundurchlässige, gasdichte bzw. kraftschlüssige Fugen auszubilden.

11. Verfahren nach einem der Ansprüche 8 bis 10, **dadurch gekennzeichnet, dass** nach Vergießen einer Fundamentmasse, insbesondere Beton, zur Ausbildung eines Fundamentkörpers (10) ein Injektionsverfüllmittel in den oder die Injektionsschläuche (20) eingebracht wird.

12. Verfahren nach einem der Ansprüche 8 bis 11, **dadurch gekennzeichnet, dass** vor dem Vergießen der Fundamentmasse, insbesondere Beton, der oder die Injektionsschläuche (20) mit einer Flüssigkeit, vorzugsweise Wasser oder einem Medium, befüllt werden oder sind.

13. Verfahren nach Anspruch 8, **dadurch gekennzeichnet, dass** der oder die Injektionsschläuche (20) mit einer Vergussmasse nach Anordnung des oder der Injektionsschläuche (20) auf der Oberseite (15) des Fundamentkörpers (10) vergossen wird oder sind, wobei insbesondere der oder die Injektionsschläuche (20) unterhalb einer Lastverteilungsplatte (26) oder im Hohlraum eines Verbindungszwischenkörpers (25) zwischen der Oberseite (15) des Fundamentkörpers (10) und der Unterseite des Turmfußflansches (17) angeordnet werden oder sind.

14. Verfahren nach einem der Ansprüche 8, 9, 11 bis 13, **dadurch gekennzeichnet, dass** das Vergießen der Vergussmasse nach Vergießen des Betons und nach Ausrichtung des Verbindungsbauteils (14, 21) und/oder nach Ausrichtung des Verbindungszwischenkörpers (25) erfolgt.

15. Verwendung eines Injektionsschlauches bei der Errichtung eines Turms einer Windenergieanlage nach einem der Ansprüche 1 bis 7, wobei insbesondere die Verfahrensschritte gemäß dem Verfahren nach einem der Ansprüche 8 bis 14 ausgeführt werden.

## Claims

1. A wind turbine (W) with a tube tower (18), wherein the tube tower (18) is arranged above a foundation body (10), preferably arranged in the floor (11), wherein the foundation body (10) is made of a foundation material, in particular concrete, and the tube tower (18) has a tower foot flange (17) on its bottom side, which is connected with the foundation body (10) by means of a flange connection, **characterized in that**
at least one injection hose (20) is arranged in the area of the top side (15) of the foundation body (10) facing the tower foot flange (17) on the top side (15) of the foundation body (10)
or at least one injection hose (20) is arranged on the top side (15) between the tower foot flange (17) and the top side (15) of the foundation body (10) facing the tower foot flange (17)
or a connection component (14, 21) is arranged in the foundation body (10), on which the tower foot flange (17) is arranged on the protruding top side (15) of the foundation body (10), wherein at least one injection hose (20) is provided in the area of the bottom part of the connection component (14, 21) arranged in the foundation body (10) at a predetermined distance from the bottom part,
wherein the injection hose(s) are arranged before the casting of the foundation material or during the pouring of the concrete such that they are laid in concrete joints and/or are set in concrete or incorporated into the sensitive areas in order to form water-impermeable, gas-tight or respectively force-fitting joints.

2. The wind turbine (W) with a tower (18) having a bottom part and a top part, wherein the top part of the tower (18) is arranged above a foundation body (10), preferably arranged in the floor (11), wherein the foundation body (10) is made of a foundation material, in particular concrete, **characterized in that** at least one injection hose (20) is provided in the area of the bottom part of the tower (18) arranged in the foundation body (10) at a predetermined distance from the bottom part, wherein the injection hose(s) are arranged before the casting of the foundation material or during the pouring of the concrete such that they are laid in concrete joints and/or are set in concrete or incorporated into the sensitive areas in order to form water-impermeable, gas-tight or respectively force-fitting joints.

3. The wind turbine (W) according to claim 1 or 2, **characterized in that** the at least one injection hose (20) is arranged or fastened on the bottom part of the connection component (14, 21) or on the bottom part of the tower (18).

4. The wind turbine (W) according to claim 1 or 3, **characterized in that** one or more injection hoses (20) are provided on a lower flange ring (19) of the bottom part of the connection component (14, 21).

5. The wind turbine (W) according to one of claims 1 to 4, **characterized in that** the injection hose(s) (20) are arranged or fastened on a lower section or a lower layer of the foundation body (10), in particular of a cleanliness plate, and/or at least one end, preferably both ends, of the injection hose(s) (20) are formed in a protruding manner from the foundation body (10), preferably inside the tower, wherein in particular a storage pocket is provided for receiving the end(s) of the injection hose (20).

6. The wind turbine (W) according to one of claims 1, 3 to 5, **characterized in that** the connection component (14, 21) is designed as a foundation installation part (14) or as an anchor basket (21).

7. The wind turbine (W) according claim 1, **characterized in that** an intermediate connection body (23, 25, 26) is provided between the bottom side of the tower foot flange (17) and the top side of the foundation body (10), wherein the at least one injection hose (20) is arranged below or in the intermediate connection body (25), wherein in particular the intermediate connection body (23, 25, 26) is in force-fitting contact with the tower foot flange (17), wherein in particular the intermediate connection body (23, 25, 26) is designed as a load distribution plate (26) or as a force transmission body (25), preferably designed with a receiving space for the injection hose (20).

8. A method for erecting a tower (18) of a wind turbine (W) with the following method steps:
- formation of a foundation body (10) made of a foundation material, preferably on or in a floor (11),
- arrangement of a tower (18) or a tower part on the top side (15) of the foundation body (10), wherein at least one injection hose (20) is arranged in an intermediate connection body (25) designed or to be designed between the bottom side of a tower foot flange (17) of the tower (18) or of the tower part and of the top side (15) of the foundation body (10).
- wherein an injection material is introduced into the injection hose(s) (20) before or during or after arrangement of the tower (18) or of the tower part on the foundation body (10),
wherein the injection hose(s) are arranged before the casting of the foundation material or during the pouring of the concrete such that they are laid in concrete joints and/or are set in concrete or incorporated into the sensitive areas in order to form water-impermeable, gas-tight or respectively force-fitting joints.

9. The method for erecting a tower (18) of a wind turbine (W) with the following method steps:
- formation of a foundation body (10) made of a foundation material, preferably on or in a floor (11), wherein a connection component (14, 21) is arranged in the foundation body (10) and its top part protrudes out of the foundation body (10).
- arrangement of at least one injection hose (20) in the area of the bottom part of the connection component (14, 21) arranged in the foundation body (10),
- arrangement of a tower (18) or of a tower part on the top side of the connection component (14, 21),
- wherein an injection material is introduced into the injection hose(s) (20) before or during or after arrangement of the tower (18) or of the tower part on the connection component (14, 21),
wherein the injection hose(s) are arranged before the casting of the foundation material or during the pouring of the concrete such that they are laid in concrete joints and/or are set in concrete or incorporated into the sensitive areas in order to form water-impermeable, gas-tight or respectively force-fitting joints.

10. The method for erecting a tower (18) of a wind turbine (W) with the following method steps:
- arrangement of a top part of a tube tower (18) above a foundation body (10), wherein at least one injection hose (20) is arranged in the area of the bottom part of the tube tower (18) arranged in the foundation body (10) at a predetermined distance from the bottom part,
- formation of a foundation body (10) made of a foundation material, wherein an injection material is introduced into the injection hose(s) (20) before or during or after arrangement of the top part of the tower (18) above the foundation body (10),
wherein the injection hose(s) are arranged before the casting of the foundation material or during the pouring of the concrete such that they are laid in concrete joints and/or are set in concrete or incorporated into the sensitive areas in order to form water-impermeable, gas-tight or respectively force-fitting joints.

11. The method according to one of claims 8 to 10, **characterized in that**, after the casting of a foundation material, in particular concrete, for the formation of a foundation body (10), an injection filling material is introduced into the injection hose(s) (20).

12. The method according to one of claims 8 to 11, **characterized in that**, before the casting of the foundation material, in particular concrete, the injection hose(s) (20) are or will be filled with a liquid, preferably water or a medium.

13. The method according to claim 8, **characterized in that** the injection hose(s) (20) are or will be casted with a casting material after arrangement of the injection hose(s) (20) on the top side (15) of the foundation body (10), wherein in particular the injection hose(s) (20) are or will be arranged below a load distribution plate (26) or in the hollow space of an intermediate connection body (25) between the top side (15) of the foundation body (10) and the bottom side of the tower foot flange (17).

14. The method according to one of claims 8, 9, 11 to 13, **characterized in that** the casting of the casting material takes place after the casting of the concrete and after alignment of the connection component (14, 21) and/or after alignment of the intermediate connection body (25).

15. Use of an injection hose in the erection of a tower of a wind turbine according to one of claims 1 to 7, wherein in particular the method steps are performed according to the method according to one of claims 8 to 14.

## Revendications

1. Eolienne (W), comprenant une tour tubulaire (18), la tour tubulaire (18) étant disposée au-dessus d'un corps de fondation (10), aménagé de préférence dans le sol (11), le corps de fondation (10) étant constitué d'une masse de fondation, plus particulièrement du béton, et la tour tubulaire (18) comprenant sur son côté inférieur, une bride de pied (17) de la tour qui est reliée au corps de fondation (10) au moyen d'une liaison par bride, **caractérisée en ce que**
au moins un tuyau d'injection (20) est disposé dans la zone du côté supérieur (15) du corps de fondation (10) faisant face à la bride de pied (17) de la tour, sur la partie supérieure (15) du corps de fondation (10),
ou au moins un tuyau d'injection (20) est disposé sur la partie supérieure (15) entre la bride de pied (17) de la tour et le côté supérieur (15) du corps de fondation (10) faisant face à la bride de pied (17) de la tour,
ou un organe de liaison (14, 21) est disposé dans le corps de fondation (10), sur le côté supérieur (15) duquel, faisant saillie du corps de fondation (10), la bride de pied (17) est disposée, au moins un tuyau d'injection (20) est disposé à une distance prédéterminée à la partie inférieure dans la zone de la partie inférieure de l'organe de liaison (14, 21) agencé dans le corps de fondation (10),
lesdits un ou plusieurs tubes d'injection sont placés avant la coulée de la masse de fondation ou pendant la coulée du béton de telle sorte qu'ils soient placés dans des joints du béton et / ou qu'ils soient noyés dans le béton dans les zones sensibles ou insérés dans les zones sensibles de façon à former des joints imperméables à l'eau, étanches aux gaz le cas échéant par serrage.

2. Éolienne (W) comprenant une tour (18) ayant une partie inférieure et une partie supérieure, la partie supérieure de la tour (18) étant disposée ou destinée à être disposée au-dessus d'un corps de fondation (10), de préférence aménagé dans le sol (11), le corps de fondation (10) étant constitué d'une masse de fondation, plus particulièrement du béton, **caractérisée en ce qu'**au moins un tuyau d'injection (20) est prévu dans la zone de la partie inférieure de la tour (18) agencée dans le corps de fondation (10) à une distance prédéterminée de la partie inférieure, lesdits un ou plusieurs tubes d'injection étant disposés avant la coulée de la masse de fondation ou la coulée du béton, de telle sorte qu'ils soient placés dans les joints de béton et / ou qu'ils soient noyés dans le béton dans les zones sensibles ou insérés dans les zones sensibles de façon à former des joints imperméables à l'eau, étanches aux gaz le cas échéant par serrage.

3. Eolienne (W) selon la revendication 1 ou la revendication 2, **caractérisée en ce qu'**au moins un tuyau d'injection (20) est disposé ou fixé sur la partie inférieure de l'organe de liaison (14, 21) ou sur la partie inférieure de la tour (18).

4. Eolienne (W) selon la revendication 1 ou la revendication 3, **caractérisée en ce qu'**un ou plusieurs tubes d'injection (20) sont agencés sur une bride annulaire inférieure (19) de la partie inférieure de l'organe de liaison (14, 21).

5. Eolienne (W) selon l'une quelconque des revendications 1 à 4, **caractérisée en ce que** le ou les tuyaux d'injection (20) sont agencés ou fixés sur une partie inférieure ou une couche inférieure du corps de fondation (10), en particulier sur une plaque de protection et / ou au moins une extrémité, de préférence les deux extrémités, du tuyau d'injection (20) ou des tuyaux d'injection (20) sont configurés de façon à faire saillie du corps de fondation (10), de préférence à l'intérieur de la tour, moyennant quoi, en particulier, il est réalisé une poche de stockage pour recevoir l'extrémité ou les extrémités du tuyau d'injection (20).

6. Eolienne (W) selon l'une quelconque des revendications 1, 3 à 5, **caractérisée en ce que** l'organe de liaison (14, 21) est réalisé sous la forme d'une pièce de fondation (14) ou un panier d'ancrage (21).

7. Eolienne (W) selon la revendication 1, **caractérisée en ce qu'**un corps intermédiaire de liaison (23, 25, 26) est prévu entre la face inférieure de bride de pied (17) de la tour et la partie supérieure du corps de fondation (10), ledit au moins un tuyau d'injection (20) est disposé au-dessous ou dans le corps intermédiaire de liaison (25), le corps intermédiaire de liaison (23, 25, 26) étant en particulier en liaison par engagement avec la bride de pied (17) de la tour, en particulier le corps intermédiaire de liaison (23, 25, 26) est formé en tant que plaque de répartition de charge (26) ou en tant que corps de transmission de force (25), de préférence aménagé avec un espace de réception pour le tube d'injection (20).

8. Procédé pour ériger une tour (18) d'une éolienne (W), comprenant les étapes suivantes :
- aménagement d'un corps de fondation (10) constitué d'une masse de fondation, de préférence sur ou dans le sol (11),
- mise en place d'une tour (18) ou d'une partie de tour sur le côté supérieur (15) du corps de fondation (10), au moins un tube d'injection (20) étant disposé dans un corps intermédiaire de liaison (25) devant être formé ou étant formé entre la face inférieure d'une bride de pied (17) de la tour (18) ou entre la partie de la tour et la face supérieure (15) du corps de fondation (10),
- une masse d'injection étant introduite dans le ou les tuyaux d'injection (20) avant ou pendant ou après la mise en place de la tour (18) ou de la partie de tour sur le corps de fondation (10),
lesdits un ou plusieurs tubes d'injection étant mis en place avant la coulée de la masse de fondation ou pendant la coulée du béton afin qu'ils soient placés dans les joints en béton et / ou qu'ils soient noyés dans le béton dans les zones sensibles ou insérés dans les zones sensibles de façon à former des joints imperméables à l'eau, étanches aux gaz le cas échéant par serrage.

9. Procédé pour ériger une tour (18) d'une éolienne (W), comprenant les étapes suivantes :
- aménagement d'un corps de fondation (10) constitué d'une masse de fondation, de préférence sur ou dans un sol (11), un organe de liaison (21, 14) étant disposé dans le corps de fondation (10) avec sa partie supérieure faisant saillie du corps de fondation (10),
- mise en place d'au moins un tuyau d'injection (20) dans la zone de la partie inférieure de l'organe de liaison (14, 21) disposé dans le corps de fondation (10),
- mise en place d'une tour (18) ou d'une partie de tour sur la face supérieure de l'organe de liaison (14, 21),
- une masse d'injection étant introduite dans le ou les tuyaux d'injection (20) avant ou pendant ou après la mise en place de la tour (18) ou de la partie de tour sur l'organe de liaison (14, 21), lesdits un ou plusieurs tubes d'injection étant mis en place avant la coulée de la masse de fondation ou pendant la coulée du béton afin qu'ils soient placés dans les joints en béton et / ou qu'ils soient noyés dans le béton dans les zones sensibles ou insérés dans les zones sensibles de façon à former des joints imperméables à l'eau, ou étanches aux gaz le cas échéant par serrage.

10. Procédé pour ériger une tour (18) d'une éolienne (W), comprenant les étapes suivantes :
- mise en place d'une partie supérieure d'une tour tubulaire (18) au-dessus d'un corps de fondation (10), au moins un tuyau d'injection (20) étant disposé dans la zone de la partie inférieure de la tour tubulaire (18) disposée sur le corps de fondation (10), à une distance prédéterminée par rapport à la partie inférieure,
- aménagement d'un corps de fondation (10) au moyen d'une masse de fondation, une masse d'injection étant introduite dans le ou les tuyaux d'injection (20) avant ou pendant ou après la mise en place de la partie supérieure de la tour (18) au-dessus du corps de fondation (10),
lesdits un ou plusieurs tubes d'injection étant mis en place avant la coulée de la masse de fondation ou pendant la coulée du béton afin qu'ils soient placés dans les joints en béton et / ou qu'ils soient noyés dans le béton dans les zones sensibles ou insérés dans les zones sensibles de façon à former des joints imperméables à l'eau, ou étanches aux gaz le cas échéant par serrage.

11. Procédé selon l'une quelconque des revendications 8 à 10, **caractérisé en ce qu'**après la coulée d'une masse de fondation, plus particulièrement du béton, pour former un corps de fondation (10), un médium de remplissage d'injection est introduit dans le ou lesdits tuyaux d'injection (20).

12. Procédé selon l'une quelconque des revendications 8 à 11, **caractérisé en ce qu'**avant la coulée de la masse de fondation, plus particulièrement du béton, un ou plusieurs tubes d'injection (20) sont remplis ou destinés à être remplis avec un liquide, de préférence de l'eau ou un autre milieu liquide.

13. Procédé selon la revendication 8, **caractérisé en ce que** lesdits un ou plusieurs tubes d'injection (20) reçoivent une coulée, ou sont destinés à recevoir une coulée, d'une masse de coulée après la pose du ou des tubes d'injection (20) sur la partie supérieure (15) du corps de fondation (10), le ou les tubes d'injection (20) étant en particulier disposés au-dessous d'une plaque de répartition de charge (26) ou dans l'espace creux d'un corps intermédiaire de liaison (25) entre la partie supérieure (15) du corps de fondation (10) et la face inférieure de la bride de pied (17) de la tour.

14. Procédé selon l'une quelconque des revendications 8, 9, 11 à 13, **caractérisé en ce que** la coulée de la masse de coulée est réalisée après la coulée du béton et après l'alignement de l'organe de liaison (14, 21) et / ou l'alignement du corps intermédiaire de liaison (25).

15. Utilisation d'un tuyau d'injection dans la construction d'une tour d'une éolienne selon l'une quelconque des revendications 1 à 7, pendant laquelle, en particulier, les étapes de procédé sont mises en oeuvre selon le procédé selon l'une quelconque des revendications 8 à 14.
